Europäisches Patentamt

European Patent Office

Office européen des brevets

(11) Publication number: **0 231 984**
A2

## (12) EUROPEAN PATENT APPLICATION

(21) Application number: 87200179.7

(22) Date of filing: 06.02.87

(51) Int. Cl.³: **A 23 C 19/064**
**A 01 J 25/16**

(30) Priority: 07.02.86 IT 1934686

(43) Date of publication of application:
12.08.87 Bulletin 87/33

(84) Designated Contracting States:
AT BE CH DE ES FR GB GR IT LI LU NL SE

(71) Applicant: Dott. Bonapace & C. S.p.A.
Via Canova, 12
I-20145 Milano(IT)

(71) Applicant: ITEP S.p.A.
Via Piedimonte 34
I-22049 Valmadera Province of Como(IT)

(72) Inventor: Cosentino,Roberto
Via B. Rucellai, 20
I-20126 Milano(IT)

(72) Inventor: Bonapace, Franco
Piazzale Giulio Cesare, 17
I-20145 Milano(IT)

(72) Inventor: Cocchi, Sergio
Via Pessina, 15
I-22100 Como(IT)

(74) Representative: Riccardi, Sergio
Riccardi & Co. Via Macedonio Melloni, 32
I-20129 Milano(IT)

(54) Salting process and apparatus for electrostatic deposition of particulate salt on cheese.

(57) A process and an apparatus for salting cheese is disclosed, more particularly by electrostatic deposition of particulate salt, allowing to deposit salt uniformly and to recover the excess of sprayed salt, with a system of feeding and recycling the particulate salt, suitably ground, dehumidified, heated and delivered by air in turn filtered, dehumidified and heated, the spraying operation being effected through delivery means with adjustable position and orientation and preferably provided with means for their movement during the spraying operation.

FIGURE 3

0231984

- 1 -

"SALTING PROCESS AND APPARATUS FOR ELECTROSTATIC DEPOSITION OF PARTICULATE SALT ON CHEESE"

The present invention relates to a process and apparatus adapted to effect salting of cheese by electrostatic deposition of particulate salt on said cheese.

It is known that in the production of cheese salting is required to obtain the osmotic exchange salt/whey and to give tastiness to the product. Salting is presently effected by two methods, that is dry or wet salting.

In dry salting cheese is treated in salting-rooms where the process takes some days according to the type of cheese.

At the beginning application of salt is mild but continuous, then quantity of salt is increased and intervals between treatments are extended, in order to avoid that salt accumulation in the cortical layers makes the cheese-rind impermeable and compact.

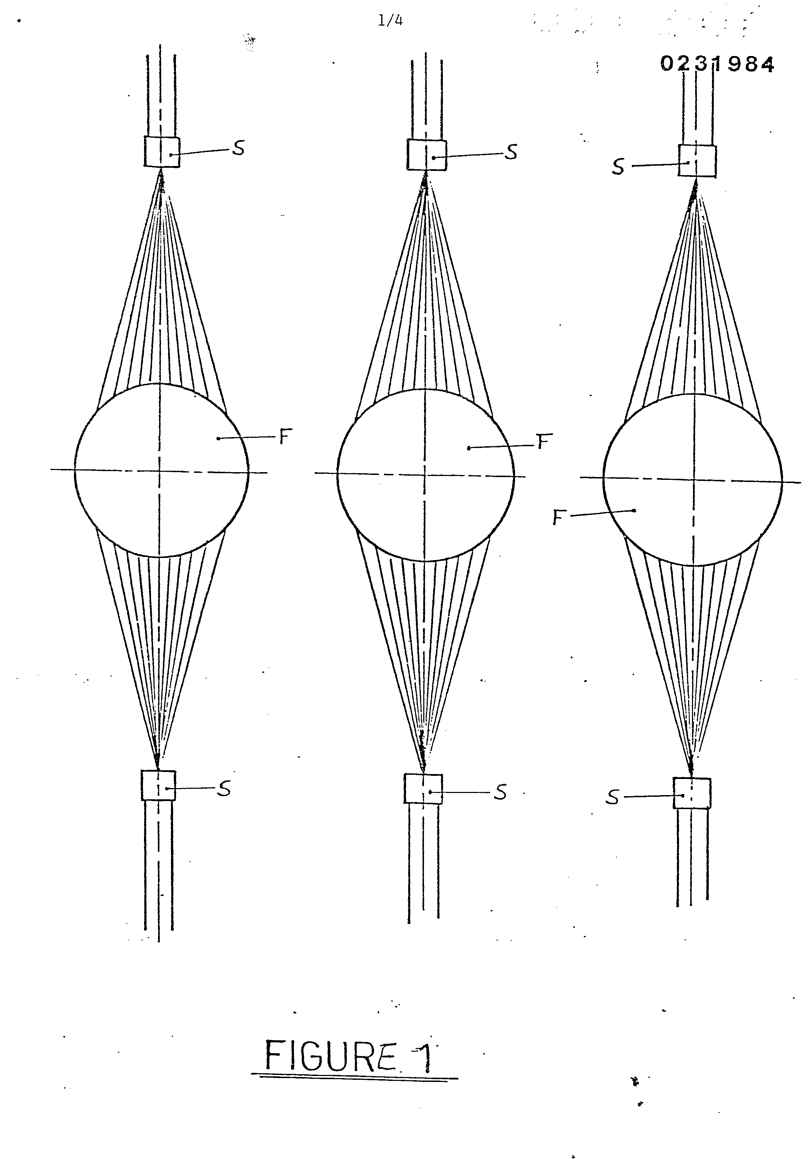

Such salting is effected by hand with obvious problems of differences of quality between pieces, pollution due to excessive handling of the product and high

- 2 -    0231984

labour costs. Automatic tunnel-shaped dry applicators are also known, where nozzles are projecting salt of normal size on cheese. Such a process, although it is an improvement in comparison with the manual process, has the serious drawback of a non uniform salting of cheese especially on its peripheral surface. The particles of common salt have indeed a diameter above 300 microns and this gives to the particles, during the spraying phase, a rectilinear motion, and therefore only suitable yet difficult bounces push some particles to the areas of the cheese F which are not in the direct field of action of the spraying heads S (see Fig. 1).

Another drawback of this system is the excessive consumption of salt, as only a part of the projected salt reaches the cheese, and the remainder referred to as overspray cannot be recycled, as it is mixed up with whey discharged from the cheese in transit.

Wet salting takes place in brine, i.e. baths of saline solution in water at controlled concentration and temperature. Cheese is dipped in said brine, loses whey and acquires salt. In this way brine acquires whey and loses a salt percentage so that said baths must be regenerated with complex and expensive methods, both from an energetic (boiling etc.) standpoint and of labour costs and plant size.

Wet salting with brine has therefore several drawbacks, namely cheese must be dried after treatment, brine is being polluted and has to be replaced, lack of uniform salting.

The present invention relates to an apparatus and a processes for the electrostatic application on cheese of particulate salt with a grain size of 5 to 150 microns. It is already known to carry out process of electrostatic application of powders on articles of different kinds, more particularly in the painting and enamelling industry. Articles are introduced in a booth at a suitable speed, hanging from an overhead conveyor or carried horizontally on a belt, or even placed manually by an operator or by any automatic handling system or robot; in such a booth articles receive the powder sprayed by delivery guns, and said powder sticks to the articles so as to allow subsequent technological processes to be effected on them. However, the sprayed powder does not stick entirely to the articles, but a part of said powder remains in suspension in the booth, another part is accumulated on the walls and bottom of the booth, and the rest would tend to come out from the booth, but at the inlets and outlets for the articles and for the passage of robots, said rest of the powder is opposed by air which enters the booth at a suitable speed and holds the powder inside the booth. Such air is drawn inside the booth by a suitable suction system integrated in the booth or external thereto, which has the double purpose of holding the powder in the booth and then to separate the powder from air, so that clean air is evacuated to the outer environment. The powder sucked by said system is recycled with different means to the powder tank where it is mixed with fresh powder. The suction systems used up to now may be either integrated in the booth in the form of movable replaceable filtering mats laid on the booth bottom or of replaceable filter hoses arranged inside the booth, or arranged outside the booth, such as truck-mounted filters arranged near the booth or connected thereto with hoses, or purification systems with cyclones and disposable end filters.

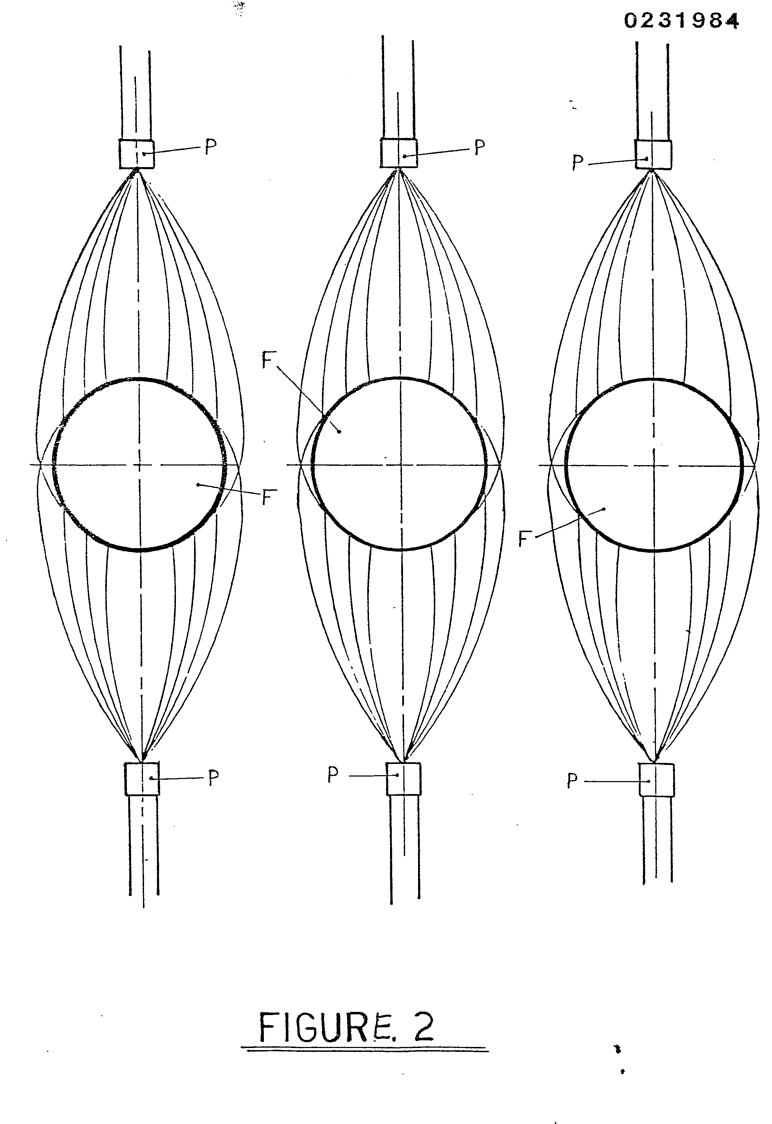

The electrostatic field between gun P and cheese F, caused by both the delivery electrode and the electrostatically charged powder cloud, has lines of force pushing the powder along curved paths so as to envelop also the areas not

being in the direct field of action of the spraying devices. In such a way the electrostatic charge gives two advantages to the powder, namely adhesion after application and uniformity of distribution (see Fig. 2).

The present invention introduces specific improvements in the technology hitherto used for spraying powders and obviously drastic improvements in the cycle of production and the equipment for salting cheese, in comparison with the above mentioned techniques.

Objects, features and advantages of the process and apparatus according to the present invention will also be clear and apparent from the following detailed description of a preferred embodiment, given as a non limiting example only, reference being had to the annexed sheets of illustrative drawings, in which:

Fig. 1 is a schematic view of the spraying system presently used according to the prior art;

Fig. 2 is a schematic view of the paths of the salt particles, when the electrostatic spraying system of the present invention is being used;

Fig. 3 is a diagrammatic view of the apparatus; and

Fig. 4 is a diagrammatic view of the booth with the indexing fixture carrying the spraying guns.

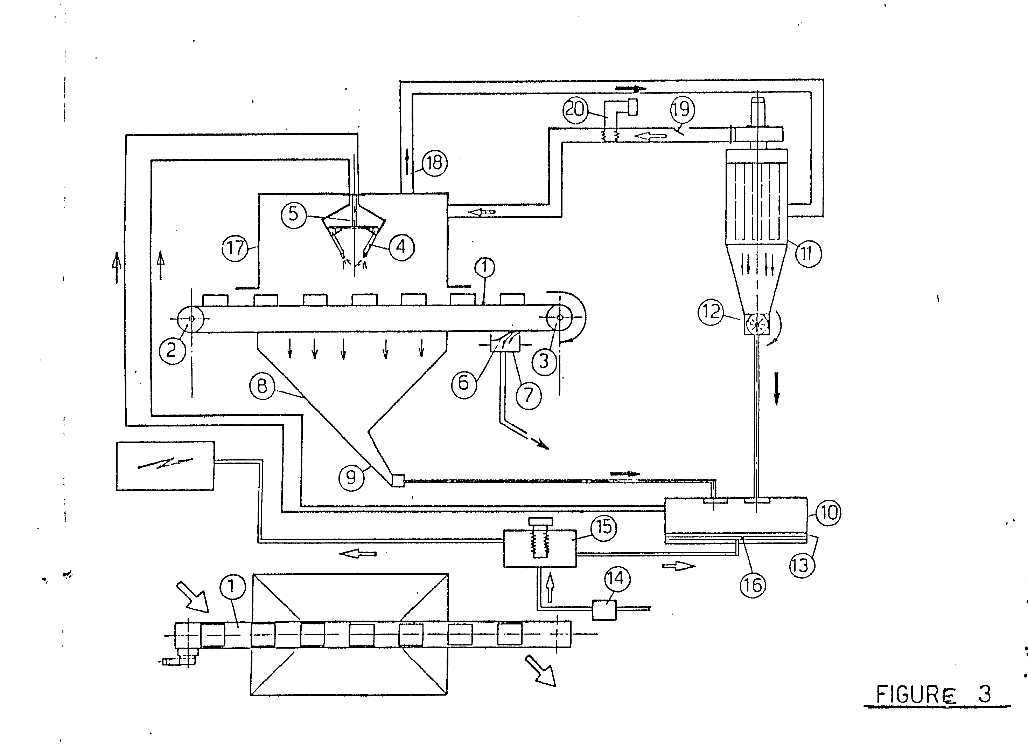

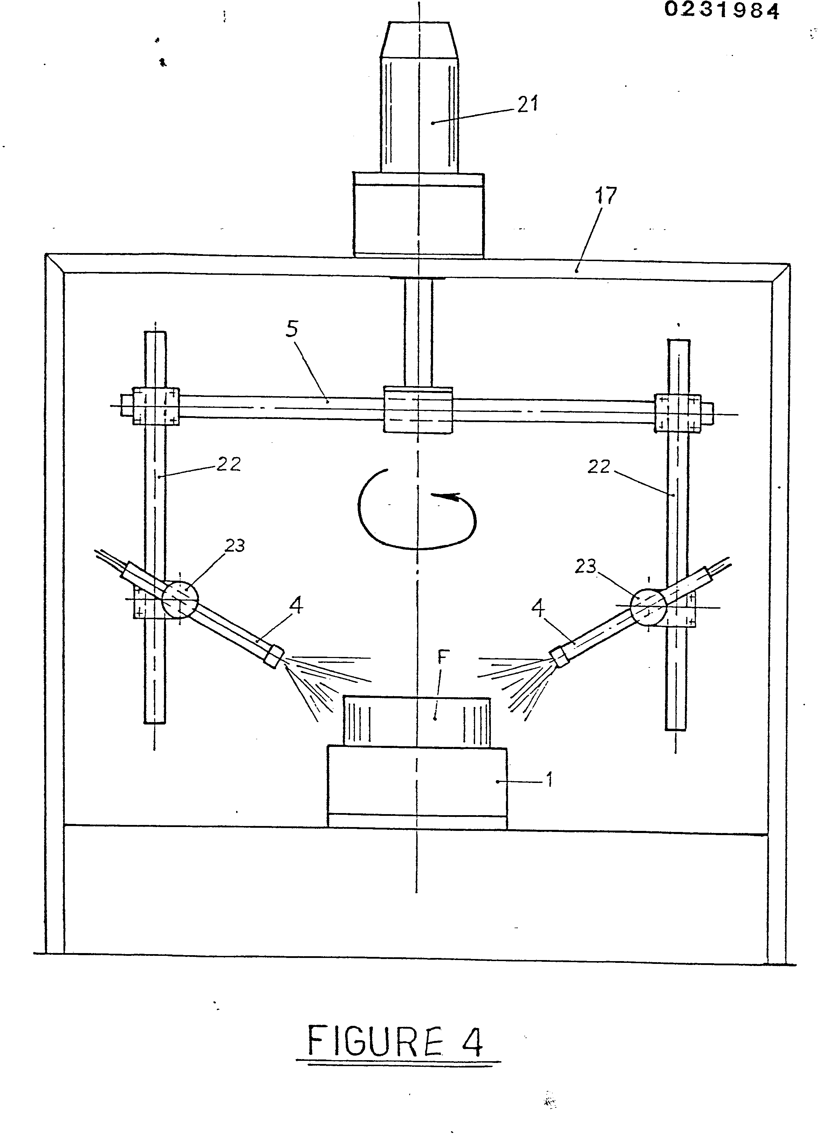

With reference now more particularly to Figs. 3 and 4 of the accompanying drawings, the apparatus according to the present invention comprises a tunnel-shaped housing (see Fig. 3) with a cheese conveyor 1, a spraying device 4, a powder recycling system 9, 10, 18, 11, 12 and a housing drying device after its washing. The apparatus comprises also a suction system 11, a powder container 10 provided with overspray recycling means and salt drying device 15.

Operative cycle

The cheese is loaded manually or by suitable handling devices (not shown) on the conveyor belt 1, which has the double purpose of carrying the cheese and receiving the salt overspray that cannot be recycled as it is mixed up with whey.

The conveyor is an endless belt with continuous or intermittent motion, is stretched between a driving roller 2 and a driven roller 3 and carries each cheese F past spraying devices 4, generally in the form of spraying guns, where cheese is uniformly coated; guns may be fixed, but it is better when they are moved in a suitable way, such as by the indexing fixture 5 (see Fig. 4) or by reciprocating devices or robots. The indexing fixture 5 is moved by a motor 21 and the guns are arranged on supports whose height may be adjusted and may also be oriented by means of articulations 23. Motion of the guns may be alternative and rotary with a symmetric projection of salt particles so as to obtain salting uniformity.

A doctor blade 6 or other similar device provides for removing salt mixed up with whey deposited on the belt 1, and this waste is collected in the waste discharge container 7. The remaining salt forming the overspray falls on the booth bottom 8, preferably shaped as a hopper, where with suitable means (e.g. with a fluidized bed) it is collected in a trap 9 and then sucked therefrom and recycled to the feeder 10 after sieving. Also salt sucked by filter 11 and discharged by the star valve 12 is recycled to feeder 10, where the salt is kept in motion by devices such as fluidized beds, mixers and the like and traces of moisture contained in the salt are removed by compressed air introduced into the feeder 10 through the porous baffle 13 of the fluidized bed. Such compressed air is dehumidified by the cryogenic device 14 and then heated by a resistance or similar device 15, before being introduced into the feeder. This heating device may also be integrated in the spreader 16 of the fluidized bed, arranged in the feeder 10. Venturi pumps suck the salt from said feeder 10 and deliver it to the spraying guns 4. The salt is reduced to powder of the selected size preferably by a suitable mill (not shown) arranged upstream the feeder 10, bu it could also be ground in an operation separated from the described apparatus.

As above mentioned, said guns are spraying salt powder mixed with air in a housing referred to as booth 17, whose lateral and top walls are preferably of transparent material, and provided with openings for inlet and outlet of cheese pieces. In this way a pressurized container would be created, but a suction system 18 is installed, keeping the whole under vacuum, so as to prevent the very fine powder to go out from said openings.

This suction system sucks from the booth, besides air, also a certain amount of salt powder that is subsequently separated and collected in the feeder 10. In Fig. 3 filter 11 is shown as sucking and separating device, which however may also be replaced by centrifugal separators such as cyclones and the like.

In order to keep low the moisture contents of the booth and to dry it after washing, it is advisable to recycle the suction air to the booth 17 after having bypassed through the valve 19 the amount of air required to obtain the desired vacuum level. A suitable heater 20 arranged after the by-pass is provided for heating the air to be recycled.

Said heater might however be also arranged in the booth, and in this case the recycle of salt powder may be eliminated.

Finally it is to be understood that many variations, modifications, additions and/or substitutions may be resorted to the apparatus of the present invention, without departing however from its spirit and scope and without falling outside its scope of protection, as it is also better defined in the appended claims.

CLAIMS

1. Cheese salting process by electrostatic deposition of particulate salt on cheese pieces, characterized by the steps of feeding dried and agitated particulate salt to a spraying booth, projecting the particulate salt on the cheese pieces by delivery means adapted to confer an electrostatic charge to said salt recovering the particulate salt in excess, and recycling said recovered salt to the feeding means.

2. Process according to Claim 1, characterized in that the spraying booth is kept under vacuum by a suction system which removes from the booth a part of the particulate salt in excess and separates said part of excess salt from the air, recycling said part to the feeding means.

3. Process according to Claim 2, characterized in that the air taken from the spraying booth by the suction system, after separation of particulate salt, is heated and fed again to the spraying booth to keep low the humidity contents.

4. Process according to Claim 1, characterized in that the particulate salt kept under agitation in the feeding means, is dried by means of dehumidified and heated compressed air.

5. Process according to Claim 1, characterized in that the delivery means have an alternate rotary motion, can be oriented and are adjustable in height.

6. Process according to Claim 1, characterized in that the excess quantity of particulate salt sprayed in the booth, is collected at the bottom of an underlaying hopper and delivered to the feeding means for being recycled.

7. Cheese salting process, substantially as hereinbefore described and as illustrated in the various figures of the accompanying drawings, for the above mentioned objects.

8. Apparatus for carrying out the process according to one or more of the preceding claims, characterized in that it comprises a spraying booth provided with a continuous or intermittent conveyor for the cheese pieces, devices for spraying the particulate salt delivered by feeding means, and recovery means for the excess of sprayed particulate salt, a part falling in a collecting hopper and a part being sucked in a separating and recycling circuit.

9. Apparatus for applying particulate salt on cheese, preferably by electrostatic application or by similar suitable means adapted to confer to the particulate salt, physical characteristics of adhesion to the articles on which said salt is sprayed, according to Claim 8, characterized in that spraying booth comprises a closed box-like body, provided with end openings for inlet and outlet of cheese pieces carried by an endless belt stretched between a driving roller and a driven roller with a continuous or intermittent motion, said box-like body having lateral and upper walls preferably made of a transparent material and a lower part in the form of a hopper or other fixed or movable shape, adapted to recover the oversprayed particulate salt, said box-like body being also connected with suction devices to keep it under vacuum so as to prevent the sprayed salt to go out from said box-like body.

10. Apparatus according to Claim 9, characterized in that the particulate salt to be used has an average grain size reduced from the conventional size of over 500 microns approximately to 5 - 100 microns by suitable milling or grinding means connected with the apparatus or remote from said apparatus.

11. Apparatus according to Claim 9, characterized in that the cheese conveyor is provided with means for collecting the whey coming out from cheese during its residence in the spraying booth and for avoiding that said whey pollutes the inner elements of the booth.

12. Apparatus according to Claim 11, characterized in that a doctor blade or similar cleaning device is arranged at the outlet end of the cheese conveyor and removes completely the mixture of whey and salt deposited on said whey.

13. Apparatus according to Claim 8, characterized in that the spraying booth is provided with an air sucking and recycling system provided with a heating device for drying the booth after washing, said heating device being preferably inserted in the air recycling circuit.

14. Apparatus according to Claim 8, characterized in that the means for feeding the particulate salt comprise a device for drying both the recycled and fresh salt, said drying device being arranged inside or outside feeding means and being also adapted to heat the previously dehydrated compressed air feeding a fluidized bed and the spraying devices.

15. Apparatus according to one or more of the preceding Claims, characterized in that the spraying booth comprises support means for the devices moving the means spraying the particulate salt, said spraying means being arranged inside or outside the booth, the spraying means however being also stationary other than provided with moving devices.

16. Apparatus according to Claim 15, characterized in that the devices for moving the spraying means have an alternative rotary motion ($\pm$ 180 degrees) and support an identical number of spraying means at both ends so as to coat the cheese rind with a symmetrical projection of salt, said moving devices being particularly suitable for cheese pieces of great size and height.

17. Salting apparatus by deposition of particulate salt on cheese, substantially as hereinbefore described and as illustrated in the various figures of the accompanying drawings, for the above mentioned objects.

FIGURE 1

0231984

# FIGURE. 2

0231984

FIGURE 3

0231984

FIGURE 4